# EUROPEAN PATENT SPECIFICATION

(11) **EP 3 557 983 B1**
(45) Date of publication and mention of the grant of the patent: **23.06.2021**
(21) Application number: 17829027.6
(22) Date of filing: 18.12.2017
(51) Int. Cl.: A01J 25/00

(54) **FORMING MACHINE FOR MAKING PASTA FILATA CHEESE STICKS**
FORMMASCHINE ZUR HERSTELLUNG VON PASTA-FILATA-KÄSESTICKS
MACHINE DE FORMAGE POUR LA FABRICATION DE BÂTONNETS DE FROMAGE À PÂTE FILÉE

(30) Priority: 20.12.2016 IT 201600128399
(43) Date of publication of application: 30.10.2019
(73) Proprietor: CMT Costruzioni Meccaniche e Tecnologia S.p.A., 12016 Peveragno CN (IT)
(72) Inventor: TOMATIS, Stefano, 12016 Peveragno (IT)
(74) Representative: Modiano, Micaela Nadia
(86) International application number: PCT/IB2017/058051
(87) International publication number: WO 2018/116121

(56) References cited:
- EP-A1- 2 845 468
- EP-A1- 2 848 115
- US-A1- 2007 012 197

## Description

The present invention relates to a forming machine for making pasta filata cheese sticks.

In the industrial production of cheese, it is known to form pasta filata into sticks by extrusion.

In a conventional extruder, the pasta filata is pushed by two oppositely rotating screw feeders toward a perforated extrusion wall, from which the pasta filata exits in the form of bars the diameter of which substantially corresponds to the diameter of the holes on the extrusion wall. The resulting bars of pasta filata are cooled in a consolidation vat filled with cold water and are cut at regular intervals to form sticks of equal length.

This conventional extrusion system has the drawback that the produced bars can have an irregular profile and an inconstant diameter, especially in the case of bars having a relatively small diameter, for example 10-15 mm.

This drawback is due to the fact that pasta filata is an elastic material which is compressed during extrusion and which, when it exits from the extruder in the form of bars, still has internal tensions which cause it to expand radially in an uncontrolled manner.

This entails further negative consequences when the bars are divided into sticks, since the above-mentioned profile and diameter irregularities lead to appreciable differences in weight between one stick and another.

EP 2845468 B1 in the name of the same Applicant describes a forming machine for pasta filata which has the purpose of overcoming the above cited drawbacks of traditional extruders

US 2007/012197 A1 discloses the preamble of claim 1.

The machine is provided with a body that has a concave surface shaped like a cylindrical sector which abuts against the convex cylindrical surface of a rotating drum. The cylindrical surfaces of the body and of the drum have respective rows of mutually opposite circumferential grooves.

The pasta filata is extruded through the body, which for this purpose is provided with holes which lead into the circumferential grooves. Then the pasta filata is conveyed by the drum for part of its rotation so as to receive a molding action caused by the mutually opposite profiles of the grooves on the body and on the drum. Finally, as in the preceding case, the bars of pasta filata that exit from the drum are cooled in a consolidation vat and are cut at regular intervals by a cutter.

In this machine, therefore, the pasta filata bars remain trapped between the body and the drum until the material has substantially stopped expanding and the profile of the bars has consolidated.

Another advantage of the system described in EP 2845468 B1 is that the pasta filata sticks always have the fibers arranged longitudinally, differently from other drum systems, in which however the grooves on the drum are longitudinal instead of circumferential. As is well known to the person skilled in the art, the longitudinal arrangement of the fibers renders the sticks resistant to fracture when subjected to traction or flexing, as occurs for example when they fall into the consolidation vat.

However, although the machine described in EP 2845468 B1 allows to reduce drastically the shape irregularities of the sticks, in the path from the drum to the cutter the pasta filata can still undergo a slight expansion.

Furthermore, during this path the bars immersed in the cold water can bend or curve, compromising the shape and weight uniformity of the sticks at cutting time.

Therefore, the aim of the present invention is to provide a forming machine for making pasta filata cheese sticks that is capable of making sticks that are even more uniform in terms of shape, dimension and weight than known systems, at the same time maintaining a predominantly longitudinal arrangement of the fibers.

Within this aim, an object of the invention is to provide a forming machine which, with respect to known systems, is relatively simple to manufacture and has a high productivity.

This aim and this and other objects which will become better apparent hereinafter are achieved by the forming machine having the characteristics presented in claim 1, while the dependent claims define other advantageous characteristics of the invention.

The invention is now described in greater detail with reference to some of its preferred but not exclusive embodiments, illustrated by way of nonlimiting example in the accompanying drawings, wherein:
Figure 1 is a longitudinally sectional view of the forming machine for making pasta filata cheese sticks according to the invention;
Figure 2 is a perspective view of a forming head of the machine of Figure 1;
Figure 3 is a perspective view of the forming head of Figure 2 from a different angle;
Figure 4 is a lateral elevation view of the forming head of Figure 2;
Figure 5 is a front elevation view of the forming head of Figure 2;
Figure 6 is a rear elevation view of the forming head of Figure 2;
Figure 7 is a view, similar to Figure 6, of a first alternative embodiment of the invention;
Figure 8 is a view, similar to Figure 6, of a second alternative embodiment of the invention;
Figure 9 is a schematic view of a portion of the forming head of Figure 2 during operation;
Figure 10 is a vector chart which illustrates schematically the speeds involved during the operation of the forming machine according to the invention.

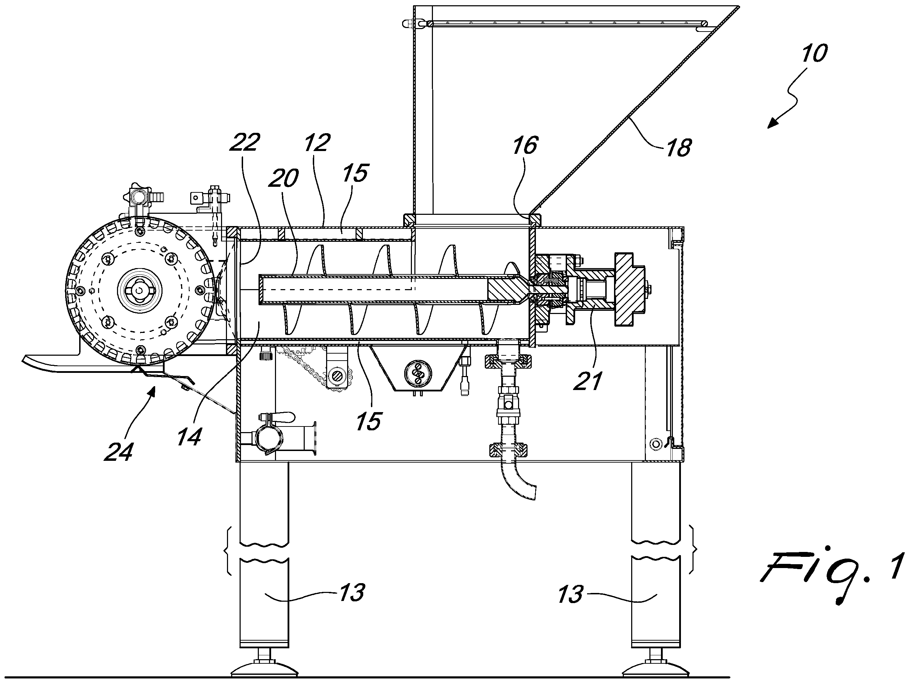

With initial reference to Figure 1, a forming machine 10 for making pasta filata cheese sticks comprises a box-like frame 12 mounted on feet 13. In the frame 12 there is a horizontal duct 14 provided with an upper loading opening 16 for receiving a mass of pasta filata (not shown) from a hopper 18.

The duct 14 is advantageously delimited by a double wall with an interspace 15 in which it is possible to feed hot water to heat the material in the duct itself.

In a per se known manner, the duct 14 accommodates a pair of oppositely rotating motorized screw feeders 20, which are supported mutually side by side (only one screw feeder is visible in Figure 1). The screw feeders 20 are rotationally actuated by motor means 21 in order to push the pasta filata toward an exit opening 22 of the horizontal duct 14. A forming head, designated generally by the reference numeral 24, is applied to the exit opening 22.

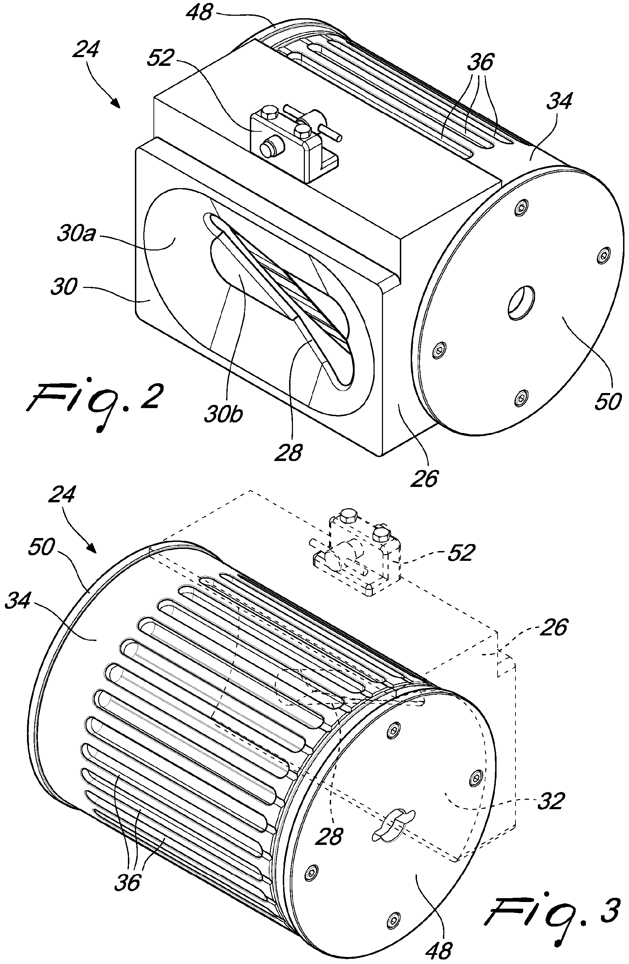

With particular reference now to Figures 2-6, the forming head 24 comprises a cylindrical drum 34 which is supported horizontally in front of the exit opening 22 and is actuated rotationally by motor means (not shown) in a per se known manner.

The drum 34 is provided with a series of mutually parallel grooves 36, which will be described in greater detail hereinafter.

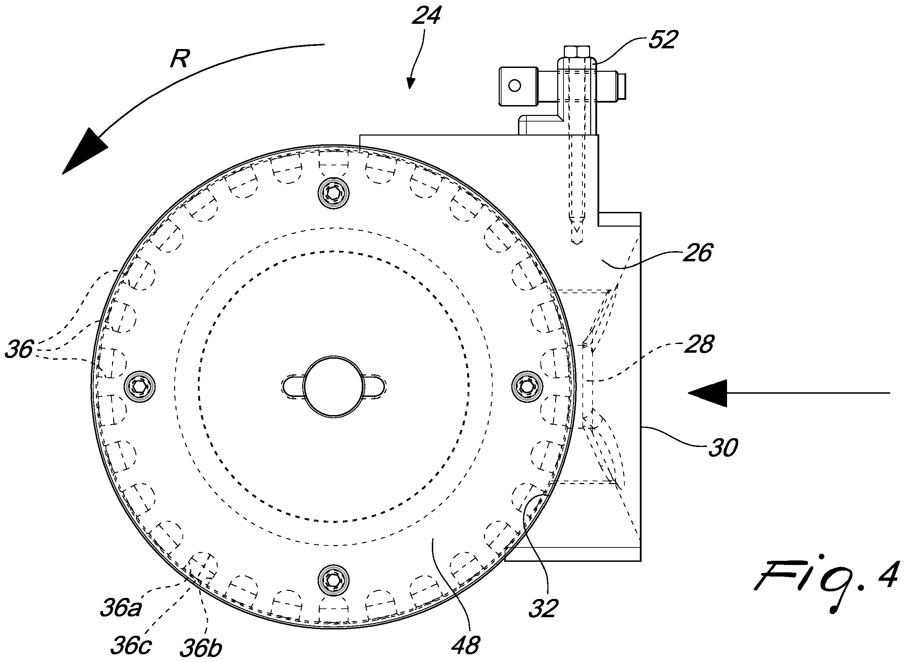

A body 26 is interposed between the exit opening 22 and the drum 34 and has a first surface 30 (Figures 2, 4 and 6) arranged so as to close the exit opening 22. A second surface 32 of the body 26 has a concave profile shaped like a cylindrical sector which has the same diameter as the drum 34 and is arranged adjacent thereto (Figures 3 and 4).

A slit 28 is extended between the first surface 30 and the second surface 32 and the pasta filata fed by the screw feeders 20 is extruded through it.

According to the invention, the grooves 36 have a profile which is elongated in the longitudinal direction of the drum and the slit 28 is extended obliquely with respect to them.

In the embodiment described herein, the grooves 36 are parallel to the axis of the drum 34 while the slit 28 is arranged frontally with respect to the drum 34 and is inclined with respect to the axis (i.e., in this case with respect to the horizontal plane) by an angle comprised preferably between 10° and 60°, in the example described herein approximately 25°.

Furthermore, in this embodiment, the grooves 36 are rectilinear and have two longitudinal, parallel and mutually opposite planar surfaces 36a, 36b and a bottom 36c which has a profile having a semicircular cross-section. Other rounded or polygonal profiles can in any case be provided for the grooves 36.

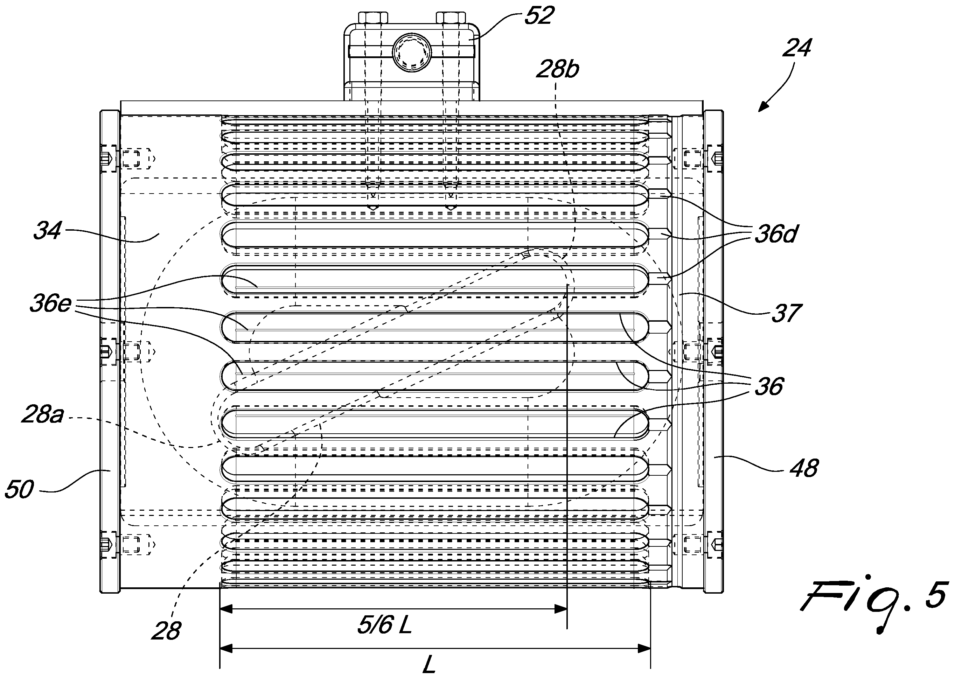

The grooves 36 are provided with respective venting channels 36d (Figure 5) which extend from one of their ends to a circumferential trough 37 provided on the surface of the drum 34.

Furthermore, the drum 34 is provided with rectilinear slots 36e (Figure 5) provided at the bottom of the grooves 36, through which it is possible to feed steam or water under pressure from the inside of the drum 34 for the purposes that will be clarified hereinafter.

The slit 28 also has a rectilinear profile - considering its projection in plan view (in this case, on a vertical plane) - and faces the grooves 36 from one of their ends (the left end in Figure 5) to an intermediate point which is proximate to their opposite end (the right end in Figure 5). In the example described herein, in which the drum 34 rotates in a direction R such as to draw upward the pasta filata extruded through the slit 28 (counterclockwise in Figure 4), the lower end 28a of the slit 28 is aligned horizontally with an end of the grooves 36, while the upper end 28b is arranged approximately at 5/6ths of the length L of the grooves 36 (Figure 5).

As shown in Figure 2, the first surface 30 has an ovoid depression 30a with a funnel-like cross-section, which is crossed transversely by the oblique slit 28. The ovoid depression 30a ends with a planar bottom 30b.

In the example described herein, the drum 34 is hollow and is closed at its opposite ends by two disk-like plates 48, 50.

The body 26 is pushed into abutment against the drum 34, which therefore rotates slidingly with the body 26, by a clamping mechanism 52.

In a per se conventional manner, downstream of the drum 34 it is possible to support a consolidation vat filled with cold water (not shown).

The drum 34 is preferably made of aluminum for food use, while the body 26 is preferably made of plastic material. Advantageously, the drum 34 is subjected to sanding at the grooves 36, in order to facilitate the adhesion of the pasta filata to its surface during rotation.

The operation of the machine 10 can be controlled advantageously by a control unit (not shown) in a per se conventional manner.

In operation, the pasta filata is introduced in the chamber 14 through the hopper 18. By actuating the screw feeders 20, the pasta filata is pushed against the first surface 30 of the body 26, with consequent extrusion through the slit 28, and enters the grooves 36 of the drum 34, which rotates in the direction indicated by the arrow R in Figure 4.

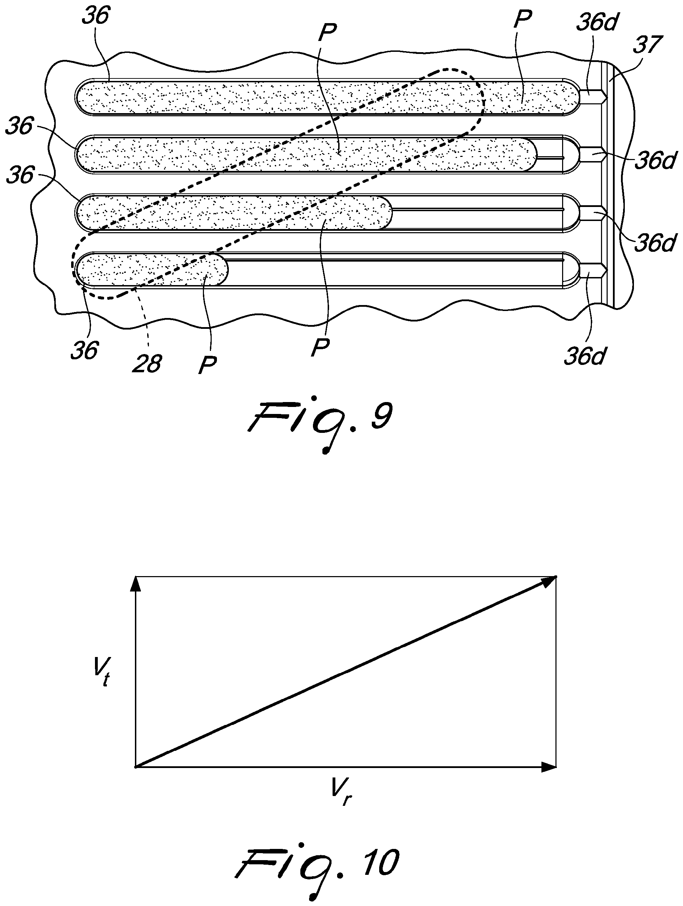

The oblique arrangement of the slit 28 with respect to the grooves 36 causes the extruded pasta filata to progressively enter the grooves 36 in a longitudinal direction from one end (in this case, the end aligned with the lower end 28a of the slit 28) to the opposite end, so as to obtain the desired longitudinal arrangement of the fibers inside the stick (Figure 9).

As shown schematically in the vector chart of Figure 10, in order to optimize the longitudinal arrangement of the fibers, it is necessary to maximize the ratio between the speed Vr at which the pasta filata P penetrates longitudinally into the grooves 36 (said speed Vr depending on the pressure generated by the screw feeders, and therefore on the rotation rate thereof), and the tangential speed Vt of the drum 34.

The pasta filata under pressure completely fills also the "blind" terminal portion of the grooves 36, which never faces the slit 28. During filling, the air contained in the grooves 36 is expelled through the venting channels 36d and the circumferential trough 37.

The inclination of the slit 28 can be optimized experimentally by the person skilled in the art as a function of the consistency of the pasta filata being processed and of the cross-section/length ratio of the grooves.

While the drum 34 draws the pasta filata for part of its rotation, it undergoes a molding action determined by the profile of the grooves 36 and of the concave surface 32 of the body 26.

The concave surface 32 of the body 26 has an angular extension that is sufficient to contain the pasta filata until it has substantially stopped expanding and the profile of the sticks inside the grooves 36 has therefore consolidated. The sizing of the body 26 can be determined experimentally as a function of the specific physical properties of the pasta filata being processed.

At a certain point of the rotation, the sticks will be unloaded by gravity, with the optional aid of steam or water under pressure fed through the rectilinear slots 36e in order to force expulsion.

By virtue of the longitudinal arrangement of the fibers, the sticks remain intact, falling into the vat.

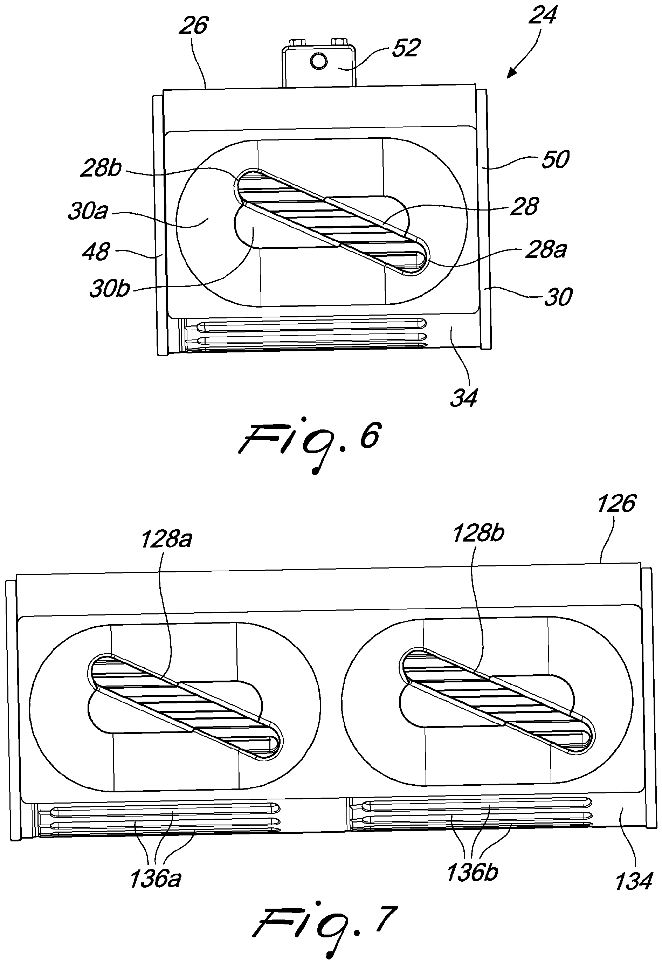

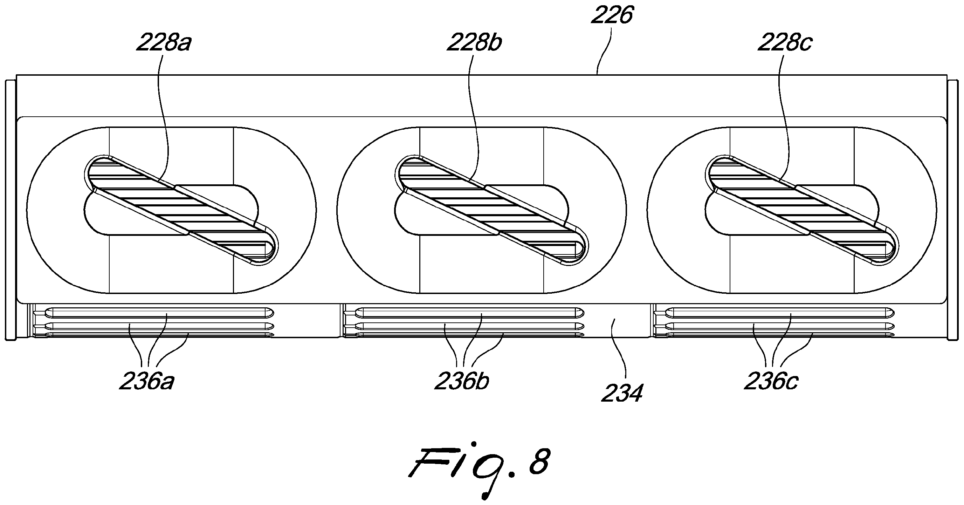

The alternative embodiments of Figures 7 and 8 differ from the preceding one only in that the drum 134 and 234 respectively has two series and three series of grooves 136a, 136b and 236a, 236b, 236c; therefore, the body 126, 226 respectively has two and three oblique slits 128a, 128b and 228a, 228b, 228c, each of which faces a respective row of grooves.

Some preferred embodiments of the invention have been described, but the person skilled in the art may of course provide different modifications and variations within the scope of the appended claims.

For example, the drum 34 might rotate in the opposite direction with respect to what has been shown, so as to unload the sticks downward.

In this case, the oblique slit would have to be inclined in the opposite direction with respect to what is shown in Figure 6, so that the grooves always fill progressively from right to left with expulsion of the air through the venting holes.

As an alternative, the slit might remain inclined as shown in Figure 6 but be moved to the left, with its upper end aligned horizontally with the left ends of the grooves, and the venting channels connected to the right ends of the grooves. In this manner, the grooves will fill progressively from left to right.

Furthermore, differently from the illustrated solutions, the slit on the body might be horizontal and the grooves on the drum might be oblique (i.e., helical, if one considers the projection of an oblique straight line on a cylinder). Also,as an alternative, both the grooves and the slit might be oblique. Essentially, what matters for the purposes of the invention is that the grooves and the slit are arranged obliquely with respect to each other.

Where technical features mentioned in any claim are followed by reference signs, those reference signs have been included for the sole purpose of increasing the intelligibility of the claims and accordingly such reference signs do not have any limiting effect on the interpretation of each element identified by way of example by such reference signs.

## Claims

1. A forming machine for making pasta filata cheese sticks, comprising
- a motorized cylindrical drum (34) with a horizontal axis, which has a diameter and a series of mutually parallel grooves (36) having a profile that is elongated along the longitudinal dimension of the drum (34),
- a body (26) provided with a concave surface (32) with a profile shaped like a cylindrical sector that has the same diameter as the drum (34) and is pushed into abutment against the drum (34), said body (26) having an elongated slit that leads onto said concave surface (32) and is adapted to receive pasta filata under pressure,
**characterized in that** said slit (28) is extended obliquely with respect to said grooves (36) and faces said grooves (36) from one end thereof to an intermediate point that is proximate to their opposite ends, from which respective venting channels (36d) extend.

2. The forming machine according to claim 1, **characterized in that** said grooves (36) are parallel to the axis of the drum (34).

3. The forming machine according to claim 1 or 2, **characterized in that** said slit (28) is inclined with respect to the axis of the drum (34) by an angle comprised between 10° and 60°.

4. The forming machine according to claim 3, **characterized in that** said angle is approximately 25°.

5. The forming machine according to one or more of claims 1-4, **characterized in that** said slit (28) faces the drum (34) frontally.

6. The forming machine according to one ore more of claims 1-5, **characterized in that** said slit (28) has a rectilinear profile.

7. The forming machine according to one or more of claims 1-6, **characterized in that** said grooves (36) are rectilinear.

8. The forming machine according to one or more of claims 1-7, **characterized in that** said grooves (36) are provided with two mutually opposite planar longitudinal surfaces (36a, 36b) and a bottom (36c) with a profile having a semicircular cross-section.

9. The forming machine according to one or more of claims 1-8, **characterized in that** said drum (34) has rectilinear slots (36e) provided at the bottom of said grooves (36), through which steam or water under pressure can be fed from the inside of the drum (34) in order to facilitate the expulsion of the pasta filata from the grooves (36).

## Patentansprüche

1. Eine Formmaschine zur Herstellung von Pasta-Filata-Käsesticks, die Folgendes umfasst:
- eine motorisierte zylindrische Walze (34) mit einer horizontalen Achse, die einen Durchmesser und eine Reihe zueinander paralleler Nuten (36) hat, die ein Profil haben, das entlang der Längsabmessung der Walze (34) entlang gestreckt ist,
- einen Körper (26) mit einer konkaven Oberfläche (32) mit einem Profil das wie ein zylindrischer Sektor geformt ist, der denselben Durchmesser hat wie die Walze (34) und bis zum Anstoßen gegen die Walze (34) geschoben wird, wobei der Körper (26) einen langgestreckten Schlitz hat, der bis zur konkaven Oberfläche (32) führt und ausgebildet ist, um Pasta-Filata unter Druck aufzunehmen,
**dadurch gekennzeichnet, dass** der Schlitz (28) sich schräg zu den Nuten (36) erstreckt und den Nuten (36) von einem Ende davon bis zu einem intermediären Punkt erstreckt, der nahe ihren gegenüberliegenden Enden ist von denen sich entsprechende Belüftungskanäle (36d) erstrecken.

2. Die Formmaschine gemäß Anspruch 1, **dadurch gekennzeichnet, dass** die Nuten (36) parallel zur Achse der Walze (34) sind.

3. Die Formmaschine gemäß Anspruch 1 oder 2, **dadurch gekennzeichnet, dass** der Schlitz (28) mit Bezug auf die Achse der Walze (34) in einem Winkel zwischen 10° und 60° geneigt ist.

4. Die Formmaschine gemäß Anspruch 3, **dadurch gekennzeichnet, dass** der Winkel ungefähr 25° beträgt.

5. Die Formmaschine gemäß einem oder mehreren der Ansprüche 1 bis 4, **dadurch gekennzeichnet, dass** der Schlitz (28) der Walze (34) frontal zugewandt ist.

6. Die Formmaschine gemäß einem oder mehreren der Ansprüche 1 bis 5, **dadurch gekennzeichnet, dass** der Schlitz (28) ein geradliniges Profil hat.

7. Die Formmaschine gemäß einem oder mehreren der Ansprüche 1 bis 6, **dadurch gekennzeichnet, dass** die Nuten (36) geradlinig sind.

8. Die Formmaschine gemäß einem oder mehreren der Ansprüche 1 bis 7, **dadurch gekennzeichnet, dass** die Nuten (36) mit zwei einander gegenüberliegenden planaren länglichen Oberflächen (36a, 36b) und einem Boden (36c) mit einem Profil versehen sind, dass einen halbkreisförmigen Querschnitt hat.

9. Die Formmaschine gemäß einem oder mehreren der Ansprüche 1 bis 8, **dadurch gekennzeichnet, dass** die Walze (34) geradlinige Schlitze (36e) am Boden der Nuten (36) hat, durch welche Dampf oder Wasser oder Druck vom Inneren der Walze (34) zugeführt werden kann, um die Entfernung der Pasta-Filata aus den Nuten (36) zu erleichtern.

## Revendications

1. Machine de formage pour fabriquer des bâtonnets de fromage à pâte filée, comprenant
- un tambour cylindrique motorisé (34) à axe horizontal, qui a un diamètre et une série de rainures mutuellement parallèles (36) ayant un profil allongé le long de la dimension longitudinale du tambour (34),
- un corps (26) pourvu d'une surface concave (32) avec un profil en forme de secteur cylindrique qui a le même diamètre que le tambour (34) et est poussé en butée contre le tambour (34), ledit corps (26) ayant une fente allongée qui mène sur ladite surface concave (32) et est adaptée pour recevoir de la pâte filée sous pression,
**caractérisée en ce que** ladite fente (28) est étendue obliquement par rapport auxdites rainures (36) et fait face auxdites rainures (36) à partir de l'une de ses extrémités à un point intermédiaire qui est proche de leurs extrémités opposées, à partir de laquelle s'étendent des canaux de ventilation respectifs (36d).

2. Machine de formage selon la revendication 1, **caractérisée en ce que** lesdites rainures (36) sont parallèles à l'axe du tambour (34).

3. Machine de formage selon la revendication 1 ou 2, **caractérisée en ce que** ladite fente (28) est inclinée par rapport à l'axe du tambour (34) d'un angle compris entre 10° et 60°.

4. Machine de formage selon la revendication 3, **caractérisée en ce que** ledit angle est d'environ 25°.

5. Machine de formage selon une ou plusieurs des revendications 1 à 4, **caractérisée en ce que** ladite fente (28) fait face au tambour (34) frontalement.

6. Machine de formage selon une ou plusieurs des revendications 1 à 5, **caractérisée en ce que** ladite fente (28) a un profil rectiligne.

7. Machine de formage selon une ou plusieurs des revendications 1 à 6, **caractérisée en ce que** lesdites rainures (36) sont rectilignes.

8. Machine de formage selon une ou plusieurs des revendications 1 à 7, **caractérisée en ce que** lesdites rainures (36) sont pourvues de deux surfaces longitudinales planes (36a, 36b) mutuellement opposées et d'un fond (36c) avec un profil ayant une coupe transversale en demi-cercle.

9. Machine de formage selon une ou plusieurs des revendications 1 à 8, **caractérisée en ce que** ledit tambour (34) présente des fentes rectilignes (36e) ménagées au fond desdites rainures (36), à travers lesquelles de la vapeur ou de l'eau sous pression peut être alimenté depuis l'intérieur du tambour (34) pour faciliter l'expulsion de la pâte filée des rainures (36).
